# FASCICULE DE BREVET EUROPEEN

(11) **EP 4 074 932 B1**
(45) Date de publication et mention de la délivrance du brevet: **27.12.2023**
(21) Numéro de dépôt: 22168358.4
(22) Date de dépôt: 14.04.2022
(51) Int. Cl.: E05D 7/10, H02B 1/44, H02B 1/38, H02B 1/28

(54) **COFFRET ÉLECTRIQUE ET MÉTHODE DE FABRICATION D'UN TEL COFFRET ÉLECTRIQUE**
STROMVERTEILERKASTEN UND VERFAHREN ZUR HERSTELLUNG EINES SOLCHEN STROMVERTEILERKASTENS
ELECTRICAL BOX AND METHOD FOR MANUFACTURING SUCH AN ELECTRICAL BOX

(30) Priorité: 15.04.2021 FR 2103914
(43) Date de publication de la demande: 19.10.2022
(73) Titulaire: Schneider Electric Industries SAS, 92500 Rueil-Malmaison (FR)
(72) Inventeur: GARCIA, Sergio, 08907 HOSPITALET DE LLOBREGAT (ES)
(74) Mandataire: Lavoix

(56) Documents cités:
- EP-A1- 0 274 549
- EP-A1- 0 274 552
- EP-A1- 0 579 213
- EP-A1- 3 556 979
- US-A1- 2010 287 733

## Description

La présente invention concerne un coffret électrique et une méthode de fabrication d'un tel coffret électrique.

Dans le domaine des installations électriques industrielles, il est connu de protéger des équipements électriques dans des coffrets électriques. De tels coffrets comprennent généralement un caisson et une porte, montée pivotante sur le caisson à l'aide de charnières.

Il est courant de chercher à démonter la porte d'un tel coffret au cours d'opérations de maintenance des équipements électriques, pour ne pas être encombrée par la porte et accéder plus facilement à l'intérieur du caisson.

Il est courant que les charnières de tels coffrets comportent deux charnons, généralement fixés à l'aide de vis, d'une part, au caisson et, d'autre part, à la porte, et une broche. La broche est insérée dans un trou cylindrique formé par les charnons pour permettre le pivotement de la porte. De tels charnières présentent l'inconvénient d'être peu pratiques à démonter, les vis devant être retirées, ce qui est chronophage et qui ne permet donc pas de facilement démonter la porte du coffret au cours d'une opération de maintenance.

Il est également connu de WO-A-2019/03441 d'utiliser une charnière démontable pour rendre une porte amovible, cette charnière comprenant une partie de cadre et une partie de porte, ces deux parties étant reliées par une broche. La charnière est prévue pour pouvoir être démontée en deux parties, à l'aide d'un dispositif de levage pouvant être actionné par une clé et permettant de séparer la partie de cadre de la broche, pour détacher la porte. Cependant, un tel système présente l'inconvénient d'être complexe, donc onéreux à réaliser et potentiellement peu fiable, et de nécessiter l'usage d'un outil, à savoir une clé, pour séparer les parties de la charnière.

EP-A-3 556 979 décrit une armoire électrique comprenant un cadre et une porte reliés ensemble par des moyens d'articulation qui comprennent un charnon, fixé sur la porte et présentant un logement, et une broche, fixée sur le cadre et reçue dans le logement du charnon. Le démontage de la porte d'une telle armoire est complexe.

C'est à ces inconvénients qu'entend plus particulièrement remédier l'invention en proposant un coffret électrique dont la porte peut être démontée facilement et dont les charnières sont simples et peu onéreuses à produire.

À cet effet, l'invention concerne un coffret électrique comprenant un caisson définissant une ouverture, une porte configurée pour fermer l'ouverture du caisson lorsqu'elle est en position de fermeture et au moins une charnière, la charnière permettant de relier la porte au caisson de manière pivotante, la charnière comprenant un charnon et une broche. Le charnon de la charnière comprend une rainure de réception de la broche, s'étendant sur toute la longueur du charnon, et une largeur du charnon est sensiblement égale à un diamètre de la broche de la charnière. La rainure du charnon de chaque charnière s'étend dans un plan de rainure comprenant un axe de pivot de la porte par rapport au caisson. Selon l'invention, la broche est montée sur la porte, le charnon est fixé au caisson, ou monobloc avec le caisson, et un angle entre le plan de rainure et un plan de l'ouverture du caisson est compris entre 5° et 35°, de préférence entre 15° et 25°.

Grâce à l'invention, la porte du coffret électrique peut être facilement séparée du caisson, en dégageant la broche de la charnière du charnon dans lequel elle est engagée par la rainure de ce charnon. L'angle formé entre le plan de rainure et le plan de l'ouverture permet d'éloigner la porte du caisson lorsque la broche est retirée de la rainure.

Selon des aspects avantageux, mais non-obligatoires de l'invention, ce coffret électrique incorpore une ou plusieurs des caractéristiques suivantes, prises isolément ou selon toutes combinaison techniquement admissibles :
- La porte du coffret est configurée pour être montée et démontée du caisson sans outils lorsqu'un angle d'ouverture de la porte est compris entre 5° et 180°, de préférence entre 90° et 180°.
- La rainure du charnon de la charnière est orientée vers l'ouverture du caisson.
- La porte comprend autant d'encoches que le coffret électrique comprend de charnières, toutes les encoches sont ménagées dans un même bord de la porte, la broche de chaque charnière traverse une encoche de part en part, et le charnon de chaque charnière est logé dans une encoche.
- Une longueur du charnon est sensiblement égale à une longueur de l'encoche dans laquelle le charnon est logé, ces longueurs étant mesurées parallèlement à un axe de pivot de la charnière.
- La rainure du charnon a un profil rectangulaire à fond semi-circulaire.
- Le caisson comprend en outre une nervure d'étanchéité, la porte comprend en outre un joint d'étanchéité, et lorsque le coffret électrique est fermé, la nervure d'étanchéité écrase le joint d'étanchéité.

Selon un autre aspect, l'invention concerne également une méthode de fabrication d'un coffret électrique tel que mentionné ci-dessus, le charnon de la charnière étant en outre monobloc avec le caisson. Selon l'invention, cette méthode comprend au moins des étapes consistant à :
a) fabriquer par moulage le caisson, le charnon étant moulé simultanément au caisson ;
b) percer le charnon d'un trou cylindrique traversant ; et
c) former une rainure dans le charnon, depuis une face intérieure du charnon jusqu'au trou cylindrique.

Cette méthode induit les mêmes avantages que ceux mentionnés ci-dessus au sujet du coffret électrique de l'invention.

L'invention sera mieux comprise et d'autres avantages de celle-ci apparaitront plus clairement à la lumière de la description qui va suivre d'un mode de réalisation d'un caisson électrique et d'une méthode de fabrication d'un coffret électrique donnée uniquement à titre d'exemple et faite en référence aux dessins annexés dans lesquels :
[Fig. 1] La figure 1 est une vue en perspective d'un coffret électrique conforme à un premier mode de réalisation de l'invention, dont la porte est ouverte ;
[Fig. 2] La figure 2 est une vue à plus grande échelle du détail II de la figure 1 ;
[Fig. 3] La figure 3 est une vue en perspective éclatée d'une partie du coffret électrique des figures 1 et 2, avec le même angle de vue que la figure 2 ;
[Fig. 4] La figure 4 est une coupe d'un détail du coffret électrique des figures 1 à 3, dont la porte est fermée, selon le plan IV de la figure 1 ;
[Fig. 5] La figure 5 est une coupe du même détail du coffret électrique des figures 1 à 4, dont la porte est ouverte, selon le plan IV de la figure 1 ; et
[Fig. 6] La figure 6 est une vue en perspective d'un charnon appartenant à une charnière d'un coffret électrique conforme à un deuxième mode de réalisation de l'invention.

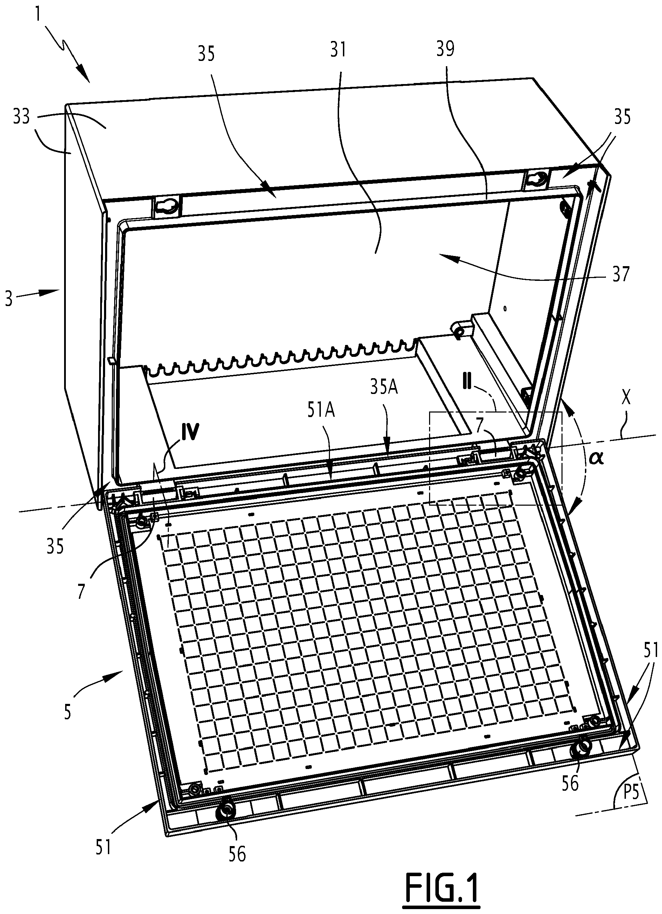

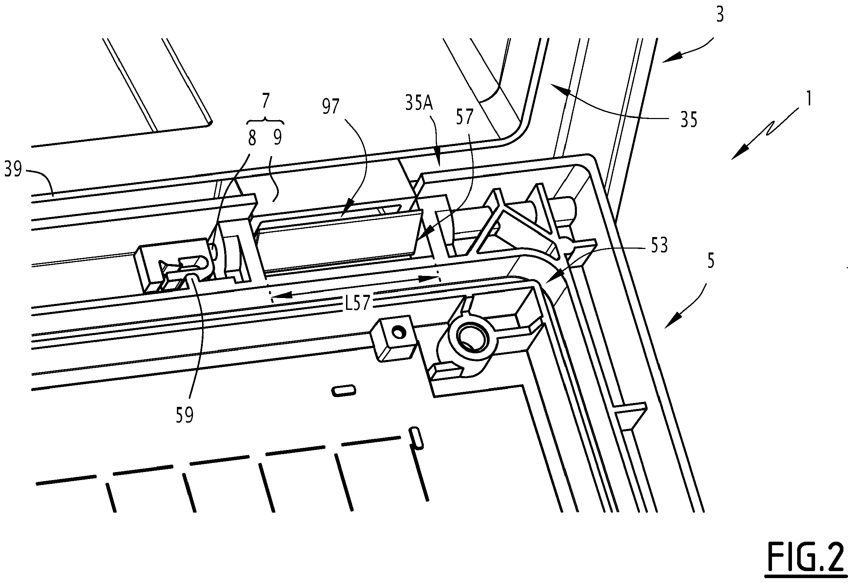

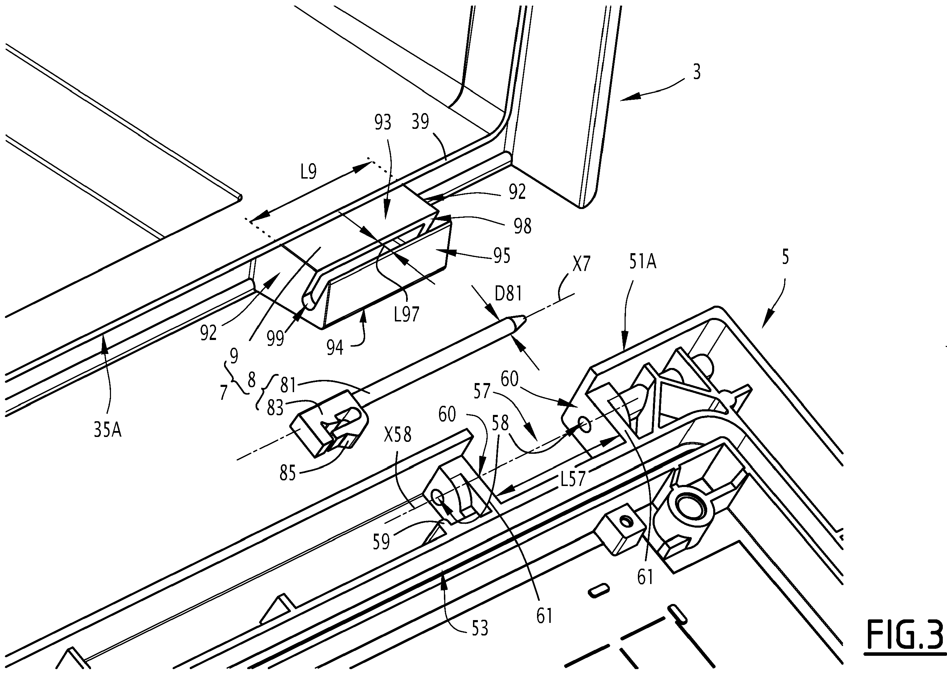

Un coffret électrique 1 est représenté aux figures 1 à 5. Le coffret électrique 1 est destiné à recevoir des équipements électriques non-représentés, tels que par exemple des disjoncteurs, des contacteurs, des relais, et/ou des compteurs.

Le coffret électrique 1 est, par exemple, monté dans une installation électrique et utilisé pour accueillir des équipements électriques d'une installation de production d'énergie, telle qu'une installation éolienne.

Le coffret électrique 1 comprend un caisson 3 et une porte 5, reliés entre eux par des charnières 7.

Dans l'exemple, le caisson 3 est de forme parallélépipédique. Le caisson 3 comprend un fond 31 et des parois latérales 33, dans l'exemple quatre parois latérales 33. Chaque paroi latérale 33 comprend un bord libre 35.

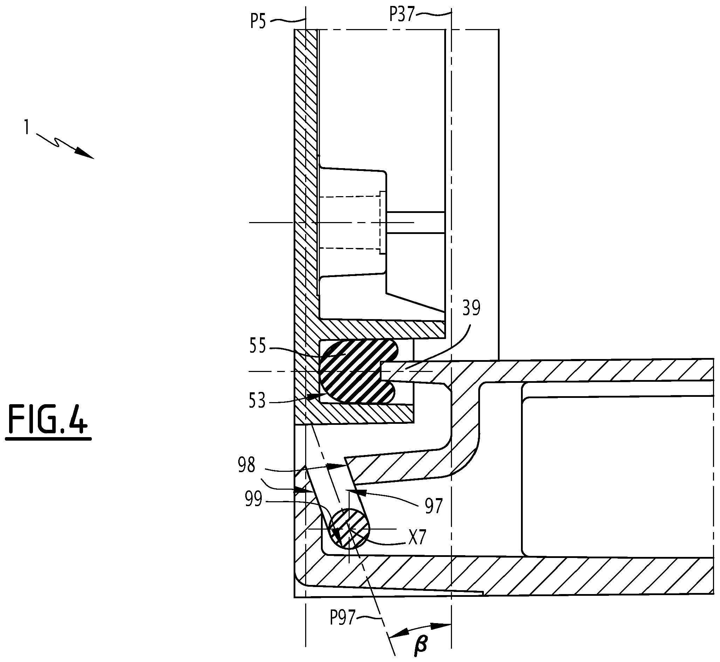

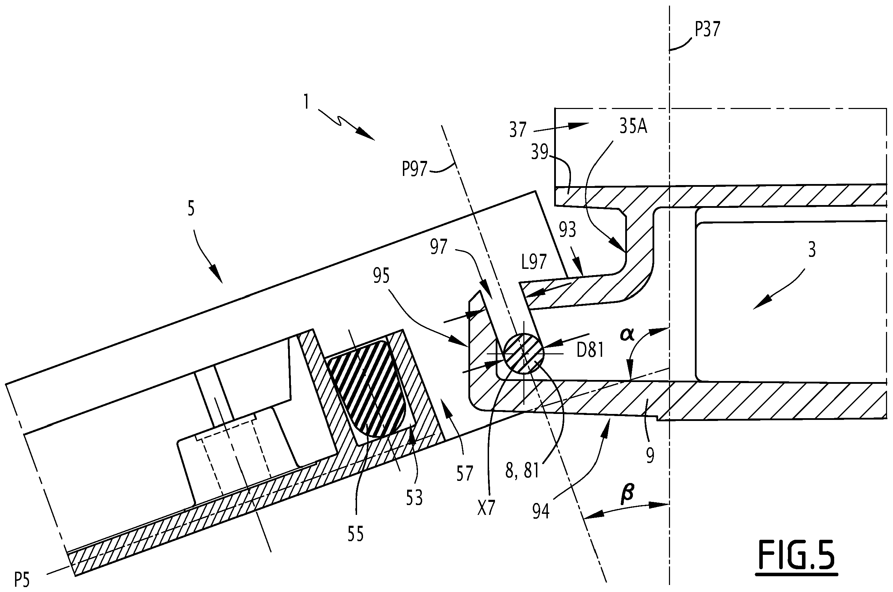

Le caisson 3 définit une ouverture 37, portée par un plan P37, mieux visible sur les figures 4 et 5. En pratique, les bords libres 35 des parois latérales 33 s'étendent dans le plan P37.

Avantageusement, le caisson 3 comprend également une nervure d'étanchéité 39, qui s'étend depuis les bords libres 35 des parois latérales 33 en s'éloignant du fond 31. La nervure d'étanchéité 39 est continue, c'est-à-dire qu'elle entoure l'ouverture 37 sans interruption.

La porte 5 du coffret électrique 1 est globalement plane et comprend quatre bords 51. La porte 5 est de dimensions équivalentes à celles du fond 31 du coffret.

L'un des bords 51 de la porte 5, noté « 51A » est relié à l'un des bords 35 du coffret 3, noté « 35A », par les charnières 7, de sorte que la porte 5 peut pivoter par rapport au caisson 3 autour des charnières.

On définit un angle d'ouverture α du coffret électrique 1 comme étant un angle formé entre le plan P37 de l'ouverture 37 et un plan principal P5 de la porte 5. Lorsque l'angle α est égal à zéro, alors le coffret électrique 1 est fermé, c'est-à-dire que la porte 5 recouvre l'ouverture 37 du caisson 3 et que les bords 51 de la porte sont en regard des bords 35 du caisson.

Lorsque l'angle d'ouverture α est supérieur à zéro, alors le coffret électrique 1 est ouvert. Dans l'exemple, en pratique, l'angle d'ouverture α maximal du coffret électrique 1 est d'environ 180°. En pratique, l'angle d'ouverture α maximal du coffret électrique 1 est défini par la géométrie de la porte 5 et du caisson 3. En variante, l'angle d'ouverture α maximal du coffret électrique 1 est supérieur, par exemple d'environ 200°.

À la figure 5, l'angle α est environ égal à 105°.

Avantageusement, la porte 5 comprend en outre un logement 53 en forme de gorge, ménagé sur les bords 51 tout autour de la porte, au fond duquel un joint d'étanchéité 55 est positionné.

Pour plus de visibilité, le joint 55 est omis sur les figures 1 à 3.

Comme visible à la figure 4, lorsque le coffret électrique 1 est fermé, la nervure d'étanchéité 39 du caisson 3 s'étend jusque dans le logement 53 de la porte 5, de sorte à écraser le joint d'étanchéité 55 au fond du logement. Grâce à l'écrasement du joint d'étanchéité 55, le coffret électrique 1 est étanche lorsqu'il est fermé, c'est-à-dire que l'intérieur du coffret électrique est protégé des projections d'eau et de la poussière, ce qui permet de protéger des équipements électriques disposés dans le coffret.

Avantageusement, la porte 5 comprend des moyens de verrouillage 56, qui coopèrent avec le caisson 3 pour permettre de verrouiller le coffret électrique 1 en position fermée de la porte.

La porte 5 comprend également des encoches 57, ménagées sur le bord 51A. Chaque encoche 57 accueille une charnière 7, c'est-à-dire que les charnières sont situées dans les encoches 57. Ainsi, la porte 5 comprend autant d'encoches que le coffret comprend de charnières.

Dans l'exemple, le coffret électrique 1 comprend deux charnières 7. En variante, le coffret électrique 1 comprend un nombre différent de charnières 7, comme par exemple une, trois ou quatre charnières.

Chaque charnière 7 comprend une broche 8 et un charnon 9.

On décrit à présent plus en détail le fonctionnement d'une charnière 7.

En pratique, la broche 8 d'une charnière 7 définit un axe de pivot X7 de cette charnière. Pour permettre le pivotement de la porte 5, les axes de pivots de l'ensemble des charnières 7 sont confondus et alignés sur un axe commun X. Ainsi, l'axe commun X forme un axe de pivot de la porte 5 par rapport au caisson 3.

Dans l'exemple, une broche 8 comprend une tige 81 et une tête 83. La tige 81 est de forme cylindrique à section circulaire.

De préférence, le diamètre D81 de la tige 81, c'est-à-dire sa largeur, mesuré perpendiculairement à l'axe X, est compris entre 2 mm et 8 mm, de préférence encore égal à 5 mm.

En outre, la tige 81 est fixée à l'une de ses extrémités à la tête 83 et la tête 83 permet de maintenir la broche 8 fixée sur la porte 5, comme expliqué ci-après.

Dans l'exemple, la tige 81 s'étend dans l'une des encoches 57 de la porte 5, en traversant cette encoche de part en part. En pratique, la tige 81 traverse deux trous de maintien 58 du bord 51A de la porte, les deux trous de maintien étant disposés de part et d'autre de l'encoche 57 et alignés sur un axe X58. L'un au moins des trous de maintien est traversant, de préférence les deux. On note L57 la longueur de l'encoche 57 mesurée entre les trous 58, parallèlement à l'axe X58.

De préférence, la longueur L57 est comprise entre 40 mm et 120 mm, de préférence encore égale à 80 mm.

En pratique, les trous de maintien 58 sont ménagés dans deux renforts 61 du bord 51A de la porte 5.

La broche 8 est montée sur la porte 5 en alignant son axe X7 sur l'axe X58 et en engageant la tige 81 dans les deux trous de maintien 58.

Pour maintenir la broche 8 fixée sur la porte 5, la tête 83 comprend un crochet 85, qui coopère avec une protrusion 59 de la porte 5, de sorte à empêcher le déplacement de la broche parallèlement à l'axe X58, dans un sens d'éloignement de la tête par rapport au renfort 61 adjacent.

En outre, le déplacement de la broche 8 parallèlement à l'axe X58, dans un sens de rapprochement de la tête 83 par rapport au renfort 61 adjacent est empêché dès que la tête 83 entre en contact avec ce renfort.

Ainsi, la broche 8 est fixe par rapport à la porte 5.

Dans l'exemple, la broche 8 est démontable par rapport à la porte 5. Avantageusement, le crochet 85 est élastiquement déformable. Ainsi, il est possible de démonter la broche 8 à l'aide d'un outil, par exemple à l'aide d'un tournevis à tête plate, voire à la main, en appuyant sur le crochet, de sorte à éloigner le crochet de la protrusion 59 et permettre le déplacement de la broche 8, parallèlement à l'axe X58, en s'éloignant du trou 58 adjacent.

En variante, la broche 8 n'est pas démontable.

En variante, d'autres conception de la broche 8 sont envisageables pour obtenir une tige s'étendant dans l'encoche 57 au travers des trous de maintien 58. Par exemple, la broche 8 comprend deux têtes, disposées de part et d'autre de la tige 81, l'une au moins des deux têtes étant fixée sur la tige après la mise en place de la tige au travers des trous de maintien 58. Selon un autre exemple, la broche comprend uniquement une tige 81, dont l'une des extrémités ou les deux extrémités sont repliées de sorte à empêcher son retrait des trous de maintien 58. Dans ce dernier cas, au moins l'une des deux extrémités de la tige 81 est repliée après la mise en place de la tige au travers des trous de maintien 58. Selon un autre exemple, la broche comprend une seule tête, fixée au bord 51A par des moyens de fixation tels que des vis.

Dans tous les cas, le montage de la tige 81 au travers des trous de maintien 58 revient à fixer la broche 8 sur la porte 5.

Le charnon 9 d'une charnière 7 est de forme allongée et s'étend parallèlement à l'axe X. On note « L9 » la longueur du charnon 9, correspondant à sa plus grande dimension, mesurée parallèlement à l'axe X.

Dans l'exemple, le charnon 9 est monobloc avec le caisson 3. Ceci correspond à une façon de rendre le charnon 9 fixe par rapport au caisson 3.

En pratique, un charnon 9 a une forme prismatique, comprenant une base non-visible sur les figures et appartenant au bord 35A du caisson 3, deux faces latérales 92, perpendiculaires au plan P37 et à l'axe X, une face intérieure 93, dirigée vers l'ouverture 37, une face extérieure 94, opposée à la face intérieure 93 et à l'ouverture 37, et une face d'extrémité 95, qui relie les faces latérales, la face intérieure et la face d'extrémité, à l'opposé de la base.

La longueur L9 du charnon 9 correspond donc à la distance séparant les deux faces latérales 92.

En outre, une rainure 97 de réception de broche est ménagée dans le charnon 9. En pratique, la rainure 97 s'étend depuis la face intérieure 93 en direction de la face extérieure 94, sur toute la largeur L9 du charnon 9, et débouche sur les deux faces latérales 92.

Le charnon 9 et la broche 8 coopèrent ensemble pour former la charnière 7. Pour cela, la tige 81 de la broche 8 est disposée dans la rainure 97 du charnon 9, de sorte à être maintenue dans le charnon et à pouvoir pivoter par rapport au charnon.

Dans cette configuration, le charnon 9 est alors logé dans l'encoche 57, entre les trous 58 dans lesquels la tige 81 est engagée.

En outre, la longueur L9 est sensiblement égal à la longueur L57 de l'encoche 57, de sorte que les faces latérales 92 sont en contact avec la porte 5 au niveau des bords de l'encoches 57, plus précisément avec les faces 60 en regard des deux renforts 61 de la porte 5 à travers lesquels sont ménagés les trous de maintien 58. Par « sensiblement égal », on entend que la longueur L9 est égale à la longueur L57 au jeu de fonctionnement près, de sorte à permettre l'insertion du charnon 9 dans l'encoche 57. En pratique, le rapport L9/L57 peut être choisi entre 0,95 et 1.

Ainsi, la rainure 97 est adaptée pour accueillir la tige 81. En pratique, dans l'exemple et comme visible aux figures 4 et 5, la rainure 97 a un profil rectangulaire à fond semi-circulaire, vu dans un plan perpendiculaire à l'axe X7.

En d'autres termes, la rainure 97 comprend deux bords 98 parallèle entre eux, qui se rejoignent pour former un fond 99 en forme de demi-cercle, vu dans un plan perpendiculaire à l'axe X7.

Lorsque la tige 81 est disposée dans la rainure 97, elle est en contact avec le fond 99.

On note « L97 » la largeur de la rainure 97, correspondant à la distance séparant les deux bords 98, mesurée selon un axe perpendiculaire aux bords 98.

En outre, la largeur L97 correspond au diamètre du fond semi-circulaire 99, mesuré dans un plan perpendiculaire à l'axe X7.

Avantageusement, la largeur L97 est sensiblement égale au diamètre D81 de la tige 81. Par « sensiblement égal », on entend que la largeur L97 est égale au diamètre D81 au jeu de fonctionnement près, de sorte à permettre l'insertion de la tige 81 et, de préférence, son pivotement dans la rainure 97. En pratique, le rapport D81/L97 peut être choisi entre 0,95 et 1.

On note « P97 » un plan principal de la rainure 97, également appelé « plan de rainure », qui correspond à un plan parallèle aux bords 98 et équidistant des bords 98. Ainsi, le plan de rainure P97 correspond au plan selon lequel la rainure 97 s'étend.

En pratique, l'axe de pivot X7 est contenu dans le plan de rainure P97.

En outre, on note « β » un angle formé entre le plan de rainure P97 et le plan P37 de l'ouverture 37. Selon l'invention, l'angle β est compris entre 5° et 35°, de préférence entre 15° et 25°. Dans l'exemple, l'angle β est égal à 16°.

La rainure 97 s'étendant depuis la face intérieure 93 du charnon 9, elle est orientée vers l'ouverture 37.

En variante, la rainure 97 est tronconique avec un fond semi-circulaire, c'est-à-dire que les bords 98 ne sont pas parallèles entre eux et divergent l'un de l'autre en s'éloignant du fond 99 de la rainure. Dans une telle variante, le plan de rainure P97 correspond alors au plan médian de la rainure, c'est-à-dire à un plan médian entre les bords 98. En outre, la largeur L97 de la rainure 97 correspond alors à la largeur mesurée perpendiculairement au plan P97, au niveau du fond 99, c'est-à-dire au diamètre du fond semi-circulaire 99.

En variante, d'autres formes de la rainure 97 sont envisageables, par exemple avec des bords 98 cylindriques avec une génératrice en forme d'arc de cercle.

De préférence, lorsque le coffret électrique 1 est monté dans une installation électrique, le bord 35A du caisson 3 est situé en bas du caisson, comme dans la configuration illustrée à la figure 1, La rainure 97 est donc orientée vers le haut. Ainsi, la tige 81 de la broche 8 est maintenue dans la rainure 97 par le poids de la porte 5, qui tend à déplacer la tige 81 vers le bas sous l'effet de la gravité, appuyant ainsi la tige contre le fond 99 de la rainure.

En outre, ce maintien de la broche 8 dans le charnon 9 par le poids de la porte 5 est assuré lorsque le coffret électrique 1 est fermé, mais également lorsque le coffret électrique est ouvert, c'est-à-dire quel que soit l'angle d'ouverture α.

Avantageusement, lorsque le coffret électrique 1 est monté dans une installation électrique de sorte que le bord 35A du caisson 3 soit vertical, c'est-à-dire situé sur un côté du caisson, et que le coffret est ouvert, les frottements causés par l'appui de l'encoche 57 sur le charnon 9 permettent de maintenir la tige 81 au niveau du fond 99 de la rainure 97.

Avantageusement, si le coffret électrique 1 est monté dans une installation électrique de sorte que le bord 35A du caisson 3 est situé en haut du caisson, alors le charnon 9 est retourné, de sorte que la rainure 97 soit orientée à l'opposé de l'ouverture 37 du caisson, et que la face extérieure 94 du charnon soit orientée vers l'ouverture 37. Ainsi, lorsque la porte 5 est assemblée sur le caisson 3, la broche 8 est maintenue dans la rainure 97 par le poids de la porte, puisque le fond 99 de la rainure est situé en bas de la rainure.

L'assemblage du coffret électrique 1, c'est-à-dire le montage de la porte 5 sur le caisson 3, comprend plusieurs étapes :
- une première étape, consistant à positionner la porte 5 par rapport au caisson 3, réalisée en approchant la porte du caisson de sorte à aligner chaque tige 81 d'une broche 8 avec la rainure 97 d'un charnon 9, et en inclinant la porte de sorte que l'angle d'ouverture α soit supérieur à 90 ° ; et
- une deuxième étape consistant à engager les tiges 81 dans les rainures 97, jusqu'à ce que les tiges 81 soient en contact avec le fond 99 des rainures pour toutes les charnières 7.

À l'issue de la deuxième étape d'assemblage, la porte 5 peut être fermée et éventuellement verrouillée à l'aide des moyens de verrouillage 56, ou maintenue ouverte.

Le désassemblage du coffret électrique 1, c'est-à-dire le démontage de la porte 5, comprend plusieurs étapes :
- une première étape consistant à ouvrir la porte 5, de sorte que l'angle d'ouverture α soit supérieur à 90° ; et
- une deuxième étape consistant à dégager les tiges 81 des rainures 97, jusqu'à sortir complètement les tiges des rainures, par une manutention manuelle de la porte.

Ainsi, le montage et le démontage de la porte 5 du coffret électrique 1 sont particulièrement simples à réaliser, et ne nécessitent pas l'utilisation d'outils.

En outre, la porte 5 peut être montée et démontée du coffret électrique 1 pour tout angle d'ouverture α compris entre 90° et 180°.

Les deuxièmes étapes ont lieu en déplaçant les broches 81 perpendiculairement à l'axe X par rapport aux rainures 97.

Le fait que le plan de rainure P97 forme un angle β compris entre 5° et 35° avec le plan P37 de l'ouverture 37 est particulièrement avantageux, car cet angle facilite le démontage de la porte 5. En effet, au cours du retrait de la tige 81 de la rainure 97, l'inclinaison de la rainure 97 conduit à éloigner la porte 5 de l'ouverture 37, ce qui facilite son dégagement. En particulier, ce dégagement permet d'éviter que la porte 5 n'entre en contact avec la nervure d'étanchéité 39 et ainsi de dégrader cette nervure. De même, le montage de la porte 5 est facilité car les risques de collision entre la porte et la nervure d'étanchéité 39 sont réduits. En pratique, le montage et le démontage de la porte 5 avec un angle d'ouverture α supérieur à 90° permet également d'éviter une collision entre la porte et la nervure d'étanchéité 39.

En outre, les charnières 7 sont particulièrement simples à fabriquer, car la broche 8 et le charnon 9 sont des pièces peu onéreuses.

En particulier, dans l'exemple des figures 1 à 5 où le charnon 9 est monobloc avec le caisson 3, la fabrication du caisson et du charnon comprend les étapes suivantes :
- une première étape de moulage simultané du caisson 3 et du charnon 9, par exemple par injection plastique, à l'issue de laquelle la forme générale du charnon 9 est obtenue, sans que la rainure 97 ne soit formée ;
- une deuxième étape de perçage du charnon 9, de sorte à obtenir un trou cylindrique de diamètre égal à L97 reliant les faces latérales 92 du charnon ; et
- une troisième étape de formation de la rainure 97, par enlèvement de matière depuis la face intérieure 93 jusqu'au trou cylindrique.

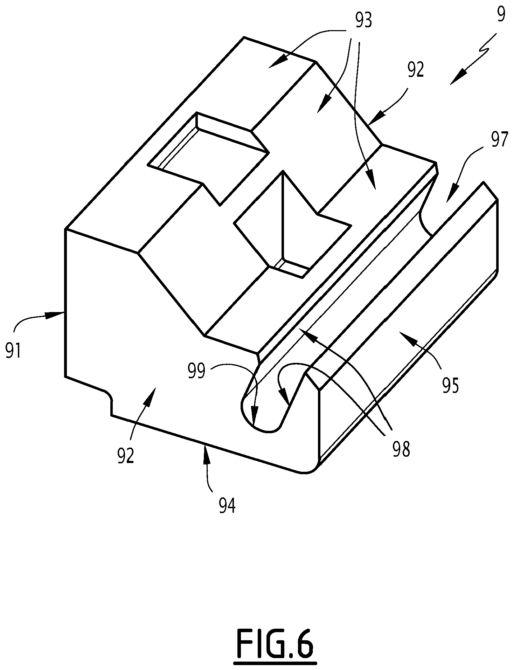

On décrit à présent, en référence à la figure 6, un charnon 9 appartenant à une charnière 7 appartenant à un coffret électrique conforme à un deuxième mode de réalisation de l'invention. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

Le charnon 9 de la figure 6 est une pièce indépendante du caisson 3, qui est prévue pour être fixée au caisson 3 par des moyens de fixation non-représentés, tels que par exemple une ou plusieurs vis.

Ici, le charnon 9 est fabriqué par moulage et/ou par usinage.

Pour fixer le charnon 9 au caisson 3, le charnon est tout d'abord positionné sur le caisson de sorte que sa base 91 soit en contact avec le bord 35A du caisson et de sorte que la rainure 97 soit orientée vers l'ouverture 37, puis le charnon est fixé sur le bord 35A, par exemple à l'aide d'une ou plusieurs vis, mise(s) en place depuis l'intérieur du caisson 3 de sorte à serrer le charnon 9 contre le bord 35A.

Ce charnon 9 indépendant du caisson 3 présente l'avantage de pouvoir être installé sur un caisson préexistant, permettant ainsi d'améliorer un caisson en rendant sa porte démontable à l'aide de charnières 7 peu onéreuses et simples d'utilisation.

En variante, le charnon 9 est monobloc avec la porte 5, ou fixé à la porte 5, et la broche 8 est fixée au caisson 3. Avantageusement, dans une telle variante, le charnon 9 est retourné par rapport aux configuration illustrées sur les figure 1 à 6, de sorte que la rainure 97 soit orientée à l'opposé de l'ouverture 37 du caisson, et que la face extérieure 94 du charnon soit orientée vers l'ouverture 37. En outre, dans une telle variante, chaque encoche 57 est ménagée dans le bord 35A du caisson 3.

En variante, le caisson 3 ne comprend pas de nervure d'étanchéité 39 et la porte 5 ne comprend ni logement 53, ni joint d'étanchéité 55. Dans une telle variante, le montage et le démontage de la porte 5 est facilité, car il y a plus d'espace disponible autour du charnon 9. Ainsi, la porte 5 peut être montée et démontée avec un angle d'ouverture de porte α plus faible, par exemple supérieur à seulement 5°. Dans une telle variante, la porte 5 peut être montée et démontée du caisson 3 avec un angle d'ouverture compris entre 5° et 180°.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Coffret électrique (1), comprenant un caisson (3) définissant une ouverture (37), une porte (5) configurée pour fermer l'ouverture du caisson lorsqu'elle est en position de fermeture et au moins une charnière (7), la charnière permettant de relier la porte au caisson de manière pivotante, la charnière comprenant un charnon (9) et une broche (8),
dans lequel le charnon (9) de la charnière (7) comprend une rainure (97) de réception de la broche, la rainure s'étendant sur toute la longueur (L9) du charnon, dans lequel une largeur (L97) de la rainure du charnon est sensiblement égale à un diamètre (D81) de la broche (8) de la charnière,
dans lequel la rainure (97) du charnon (9) de chaque charnière (7) s'étend dans un plan de rainure (P97) comprenant un axe de pivot (X) de la porte (5) par rapport au caisson (3), **caractérisé en ce que** :
- la broche (8) est montée sur la porte (5),
- le charnon (9) est fixé au caisson (3), ou monobloc avec le caisson, et
- un angle (β) entre le plan de rainure (P97) et un plan (P37) de l'ouverture (37) du caisson est compris entre 5° et 35°, de préférence entre 15° et 25°.

2. Coffret électrique (1) selon la revendication 1, **caractérisé en ce que** la porte (5) du coffret (1) est configurée pour être montée et démontée du caisson (3) sans outils lorsqu'un angle d'ouverture (α) de la porte est compris entre 5° et 180°, de préférence entre 90° et 180°.

3. Coffret électrique (1) selon l'une quelconque des revendications précédentes, **caractérisé en ce que** la rainure (97) du charnon (9) de la charnière (7) est orientée vers l'ouverture (37) du caisson (3).

4. Coffret électrique (1) selon l'une quelconque des revendications précédentes, **caractérisé en ce que** :
- la porte (5) comprend autant d'encoches (57) que le coffret électrique (1) comprend de charnières,
- toutes les encoches sont ménagées dans un même bord (51A) de la porte,
- la broche de chaque charnière traverse une encoche de part en part, et
- le charnon de chaque charnière est logé dans une encoche.

5. Coffret électrique (1) selon la revendication 4, **caractérisé en ce qu'**une longueur (L9) du charnon (9) est sensiblement égale à une longueur (L57) de l'encoche (57) dans laquelle le charnon est logé, ces longueurs étant mesurées parallèlement à un axe de pivot (X7) de la charnière.

6. Coffret électrique (1) selon l'une quelconque des revendications précédentes, **caractérisé en ce que** la rainure (97) du charnon (9) a un profil rectangulaire à fond semi-circulaire.

7. Coffret électrique (1) selon l'une quelconque des revendications précédentes, **caractérisé en ce que** :
- le caisson (3) comprend en outre une nervure d'étanchéité (39),
- la porte (5) comprend en outre un joint d'étanchéité (55), et
- lorsque le coffret électrique (1) est fermé, la nervure d'étanchéité écrase le joint d'étanchéité.

8. Méthode de fabrication d'un coffret électrique (1), le coffret électrique étant selon l'une quelconque des revendications 1 à 7, dans lequel le charnon (9) de la charnière (7) est en outre monobloc avec le caisson (3), **caractérisée en ce que** la méthode comprend au moins des étapes consistant à :
a) fabriquer par moulage le caisson (3), le charnon (9) étant moulé simultanément au caisson ;
b) percer le charnon d'un trou cylindrique traversant ; et
c) former une rainure (97) dans le charnon, depuis une face intérieure (93) du charnon jusqu'au trou cylindrique.

## Patentansprüche

1. Stromverteilerkasten (1), umfassend ein Gehäuse (3), das eine Öffnung (37) definiert, eine Tür (5), die dazu ausgelegt ist, die Öffnung des Gehäuses zu verschließen, wenn sie in geschlossener Position ist, und mindestens ein Scharnier (7), wobei das Scharnier gestattet, die Tür mit dem Gehäuse schwenkbar zu verbinden, wobei das Scharnier ein Scharnierteil (9) und einen Stift (8) umfasst,
wobei das Scharnierteil (9) des Scharniers (7) eine Stiftaufnahmenut (97) umfasst, wobei sich die Nut über die gesamte Länge (L9) des Scharnierteils erstreckt, wobei eine Breite (L97) der Nut des Scharnierteils im Wesentlichen gleich einem Durchmesser (D81) des Stifts (8) des Scharniers ist,
wobei sich die Nut (97) des Scharnierteils (9) jedes Scharniers (7) in einer Nutebene (P97) erstreckt, die eine Schwenkachse (X) der Tür (5) in Bezug auf das Gehäuse (3) umfasst, **dadurch gekennzeichnet, dass**:
- der Stift (8) an der Tür (5) angebracht ist,
- das Scharnierteil (9) am Gehäuse (3) befestigt oder einteilig mit dem Gehäuse ist, und
- ein Winkel (β) zwischen der Nutebene (P97) und einer Ebene (P37) der Öffnung (37) des Gehäuses zwischen 5° und 35°, vorzugsweise zwischen 15° und 25°, liegt.

2. Stromverteilerkasten (1) nach Anspruch 1, **dadurch gekennzeichnet, dass** die Tür (5) des Verteilerkastens (1) derart ausgelegt ist, ohne Werkzeug am Gehäuse (3) anbringbar und demontierbar zu sein, wenn ein Öffnungswinkel (α) der Tür zwischen 5° und 180°, vorzugsweise zwischen 90° und 180°, liegt.

3. Stromverteilerkasten (1) nach einem der vorhergehenden Ansprüche, **dadurch gekennzeichnet, dass** die Nut (97) des Scharnierteils (9) des Scharniers (7) zur Öffnung (37) des Gehäuses (3) ausgerichtet ist.

4. Stromverteilerkasten (1) nach einem der vorhergehenden Ansprüche, **dadurch gekennzeichnet, dass**:
- die Tür (5) so viele Kerben (57) umfasst, wie der Schaltkasten (1) Scharniere umfasst,
- alle Kerben in derselben Kante (51A) der Tür ausgebildet sind,
- der Stift jedes Scharniers eine Kerbe durchgehend durchquert, und
- das Scharnierteil jedes Scharniers in einer Kerbe untergebracht ist.

5. Stromverteilerkasten (1) nach Anspruch 4, **dadurch gekennzeichnet, dass** eine Länge (L9) des Scharnierteils (9) im Wesentlichen gleich einer Länge (L57) der Kerbe (57) ist, in der das Scharnierteil untergebracht ist, wobei diese Längen parallel zu einer Schwenkachse (X7) des Scharniers gemessen werden.

6. Stromverteilerkasten (1) nach einem der vorhergehenden Ansprüche, **dadurch gekennzeichnet, dass** die Nut (97) des Scharnierteils (9) ein rechteckiges Profil mit halbkreisförmigem Boden hat.

7. Stromverteilerkasten (1) nach einem der vorhergehenden Ansprüche, **dadurch gekennzeichnet, dass**:
- das Gehäuse (3) ferner eine Dichtungsrippe (39) umfasst,
- die Tür (5) ferner eine Dichtung (55) umfasst, und
- wenn der Stromverteilerkasten (1) geschlossen ist, die Dichtungsrippe die Dichtung zusammendrückt.

8. Verfahren zur Herstellung eines Stromverteilerkastens (1), wobei der Stromverteilerkasten nach einem der Ansprüche 1 bis 7 ist, wobei das Scharnierteil (9) des Scharniers (7) ferner einteilig mit dem Gehäuse (3) ist, **dadurch gekennzeichnet, dass** das Verfahren mindestens die folgenden Schritte umfasst:
a) Herstellen des Gehäuses (3) durch Formen, wobei das Scharnierteil (9) gleichzeitig mit dem Gehäuse geformt wird;
b) Durchbohren des Scharnierteils mit einem zylindrischen Durchgangsloch; und
c) Bilden einer Nut (97) in dem Scharnierteil von einer Innenseite (93) des Scharnierteils bis zu dem zylindrischen Loch.

## Claims

1. An electrical box (1), comprising a casing (3) defining an opening (37), a door (5) configured to close the casing opening when in a closed position and at least one hinge (7), the hinge enabling the door to be pivotally connected to the casing, the hinge comprising a knuckle (9) and a pin (8),
wherein the knuckle (9) of the hinge (7) comprises a pin-receiving groove (97), the groove extending along the entire length (L9) of the knuckle, wherein a width (L97) of the knuckle groove is substantially equal to a diameter (D81) of the hinge pin (8),
in which the groove (97) of the hinge pin (9) of each hinge (7) extends in a groove plane (P97) comprising a pivot axis (X) of the door (5) with respect to the casing (3), **characterised in that**:
- the pin (8) is mounted on the door (5),
- the knuckle (9) is fixed to the casing (3), or integral with the casing, and
- an angle (β) between the plane of the groove (P97) and a plane (P37) of the opening (37) of the casing is between 5° and 35°, preferably between 15° and 25°.

2. An electrical enclosure (1) as claimed in claim 1, **characterised in that** the door (5) of the enclosure (1) is configured to be fitted and removed from the enclosure (3) without tools when an opening angle (α) of the door is between 5° and 180°, preferably between 90° and 180°.

3. An electrical box (1) according to any one of the preceding claims, **characterised in that** the groove (97) of the knuckle (9) of the hinge (7) is oriented towards the opening (37) of the casing (3).

4. An electrical box (1) according to any one of the preceding claims, **characterised in that**:
- the door (5) has as many notches (57) as the electrical box (1) has hinges,
- all the notches are made in the same edge (51A) of the door,
- the pin of each hinge passes through a notch, and
- the knuckle of each hinge is housed in a notch.

5. An electrical box (1) according to claim 4, **characterised in that** a length (L9) of the hinge pin (9) is substantially equal to a length (L57) of the notch (57) in which the hinge pin is housed, these lengths being measured parallel to a pivot axis (X7) of the hinge.

6. An electrical box (1) according to any one of the preceding claims, **characterised in that** the groove (97) of the knuckle (9) has a rectangular profile with a semicircular base.

7. An electrical box (1) according to any one of the preceding claims, **characterised in that**:
- the casing (3) also comprises a sealing rib (39),
- the door (5) also comprises a seal (55), and
- when the electrical box (1) is closed, the sealing rib crushes the seal.

8. A method of manufacturing an electrical box (1), the electrical box being according to any one of claims 1 to 7, in which the knuckle (9) of the hinge (7) is furthermore integral with the box (3), **characterised in that** the method comprises at least the steps of:
a) manufacturing the box (3) by moulding, the knuckle (9) being moulded at the same time as the box;
b) drilling a cylindrical through-hole in the knuckle; and
c) forming a groove (97) in the knuckle, from an inner face (93) of the knuckle to the cylindrical hole.
